(19) Europäisches Patentamt
European Patent Office
Office européen des brevets

(11) Publication number: 0 147 089 B1

(12) **EUROPEAN PATENT SPECIFICATION**

(45) Date of publication of patent specification: **19.10.88**

(51) Int. Cl.$^4$: **C 08 L 25/16**

(21) Application number: **84308388.2**

(22) Date of filing: **04.12.84**

(54) **P-methylstyrene polymer blends.**

(30) Priority: **05.12.83 US 558233**

(43) Date of publication of application:
**03.07.85 Bulletin 85/27**

(45) Publication of the grant of the patent:
**19.10.88 Bulletin 88/42**

(84) Designated Contracting States:
**BE DE FR GB IT NL**

(56) References cited:
**EP-A-0 013 139**

(73) Proprietor: **MOBIL OIL CORPORATION**
**150 East 42nd Street**
**New York New York 10017 (US)**

(72) Inventor: **Kawczak, Alex Walter**
**1-22 Pheasant Hollow**
**Plainsboro New Jersey 08536 (US)**
Inventor: **Gunesin, Binnur Zeynep**
**27 Old Stirling Road**
**Warren New Jersey 07060 (US)**

(74) Representative: **Cooper, John Anthony et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 147 089 B1

**Description**

The present invention relates to para-methylstyrene polymer blends.

Blending poly(para-methylstyrene) with other polymers is known in the art. For example, it has previously been disclosed to blend poly(para-methylstyrene) and polystyrene with conjugated polydienes (U.S. Patent 4,352,908), a conjugated diene, such as isoprene or butadiene (U.S. Patent 4,260,694 and 4,397,988); a styrene-conjugated diolefin block copolymer such as styrene-butadiene-styrene (U.S. Patent 4,275,179); or polyethylene (EPA 13139).

It has, however, now been found that uniform blends of poly(para-methylstyrene) and polyethylene exhibit impact strengths and elongations which are superior to those of polystyrene; poly(para-methylstyrene); and blends of polystyrene and polyethylene.

The present invention provides in a polymer blend comprising polyethylene, poly(para-methylstyrene) and a compatibilizing agent.

In accordance with a further aspect of the present invention there is provided a method of preparing a polymer blend comprising polyethylene; poly(para-methylstyrene) and a compatibilizing agent, which method comprises the following steps:

1) combining the compatibilizing agent with the polyethylene to form a blended mixture; and

2) combining the poly(para-methylstyrene) with the blended mixture.

An essential monomer component in preparing the polymer blend is p-methylstyrene. In practice, it may be convenient to use a mixture of methylstyrene isomers rich in p-methylstyrene, that is containing at least 90 weight percent, preferably 95 weight percent, more preferably 97 or greater weight percent, p-methylstyrene and less than 0.1 weight percent o-methylstyrene, with the balance being m-methylstyrene. A typical mixture contains, by weight, about 97 percent p-methylstyrene, about 3 percent m-methylstyrene and about 0.05 percent o-methylstyrene. Such a mixture can be obtained by catalytic dehydrogenation of a corresponding mixture of ethylmethyl benzene isomers, as described in U.S. Patent No. 4,086,287. Homopolymers and copolymers of p-methylstyrene are prepared in known manner, utilizing methods analogous to those long used for the preparation of polystyrene and styrene copolymers. The preparation of poly(p-methylstyrene) polymers and random copolymers of styrene and p-methylstyrene is described in U.S. Patent No. 4,306,049. Useful comonomers include acrylic monomers, particularly acrylonitrile, acrylic acid and methacrylic acid esters, such as methyl methacrylate.

Another favoured class of p-methylstyrene copolymers are the high impact copolymers. These are generally graft copolymers, produced by grafting p-methylstyrene onto a backbone polymer which is generally of a rubbery nature. Suitable backbone polymers include polybutadiene, poly(dimethylbutadiene), polyisoprene, polychloroprene and other synthetic rubbers, such as the styrene-butadiene rubbers (SBR), ethylene-propylene-diene elastomers (EPR), polyacrylates, nitrile rubbers and copolymers with other aromatic monomers, including vinyl toluene. The backbone will generally comprise 2 to 25 percent by weight of the high impact copolymer, preferably 3 to 10 percent by weight. Normal techniques, e.g., grafting, comparable to those used for making high impact polystyrenes, are useful; they are well known in the art and referred to, for example, in U.S. Patent No. 2,694,692 and British Patent No. 1054301.

The other major component of the instant polymer blend is polyethylene. Polyethylene is of course well known in the art and is commercially available in bulk. Generally, polyethylene is divided into two classes: high density and low density. The density depends upon the degree of linearity and crystallinity of the polymer. High-density polyethylene is mostly linear and crystalline, and low-density polyethylene is about half-branched and much less crystalline. More complete descriptions of polyethylene may be found in Cook, G. A., Survey of Modern Industrial Chemistry, Ann Arbor Science Publishers, Inc., 1975, pp. 252—254, and Wiseman, P., An Introduction to Industrial Organic Chemistry, John Wiley & Sons, 1976, pp. 288—289, 306. A variety of forms of polyethylene, including low density polyethylene (LDPE), linear low density polyethylene (LLDPE), and high density polyethylene (HDPE), are suitable for use in the instant polymer blends.

With a compatibilizing agent is employed, it is preferably a hydrogenated diene block copolymer, preferably with styrene or p-methylstyrene. The diene preferably has from 4—8 carbon atoms per molecule and still more preferably from 4—5 carbon atoms. Thus, the preferred dienes are butadiene and isoprene, although methylisoprene and other conjugated dienes may be utilized, as well as mixtures thereof. Representative compatibilizing agents are hydrogenated derivatives of poly(p-methylstyrene)-polybutadiene, poly(p-methylstyrene)-polyisoprene, poly(styrene)-polybutadiene, and poly(styrene)-polyisoprene. The molecular weight of the block copolymers vary from 90,000 to 200,000.

The hydrogenated materials may be hydrogenated to any desired extent, although substantially complete hydrogenation of at least the conjugated diene polymer block is desirable. The hydrogenation process may be carried out according to the methods disclosed in U.S. Patent No. 3,959,239. It is desirable to reduce the original unsaturation of the block copolymer by at least about 50% and preferably by at least about 90%. The reasons for hydrogenation are broadly two-fold, in that hydrogenation increases the stability of the product as well as raising its softening point.

The block copolymer generally will contain between 25 weight percent and 75 weight percent poly(p-methylstyrene) or polystyrene and 25 to 75 weight percent conjugated diene. The diene content of the block copolymer may vary outside these ranges, but it is preferred that the diene content be selected so that the

block copolymer is hard and resinous, as opposed to rubbery, as occurs with high diene content.

The general configuration of the block copolymer compatibilizing agent is

A—B

wherein A is a polymer block of styrene or p-methylstyrene and B is a polymer block of the hydrogenated derivative of the diene. A representative styrene-butadiene diblock copolymer is available from Shell Chemical Company under the trade name Shellviz-40.

An alternative compatibilizing agent is prepared by grafting p-methylstyrene onto polyethylene in a suitable solvent, such as ethylbenzene, in the presence of a conventional high or low temperature initiator. In general, the term "low temperature initiator" refers to one with a half-life of 1 to 2 hours at 85°C. Example include benzoyl peroxide, acetyl peroxide, t-butyl peroxyisobutyrate, p-chlorobenzoyl peroxide, 2,5-dimethyl-2,5 bis (2-ethyl hexanoylperoxy) hexane, and t-butyl peroctoate. A "high temperature initiator" is one which has a half life of from 0.3 to 5 hours at 130°C. Examples include t-butyl perbenzoate, t-butyl peracetate, di-t-butyl peroxyphthalate, dicumyl peroxide, alpha, alpha, bis(t-butyl peroxy) diisopropyl benzene and t-butyl peroxy (2-methylbenzoate).

The weight percent ratio of the blend components can be varied. Generally the blend will contain poly(p-methylstyrene) at a level from 50 to 85 percent by weight, polyethylene from 10 to 47.5 percent by weight, and the compatibilizing agent from 2 to 10 percent by weight, preferably 2 to 5 percent by weight.

The components of the blend may be blended simulaneously. However, it is preferred to first blend polyethylene and the compatibilizing agent and then blend the poly(p-methylstyrene) into the polyethylene-compatibilizing agent mixture.

Blending of the polymers is accomplished by procedures well known in the art, including mixing the polymers in a Brabender mixer, extruder or in a 2-roll differential speed mixer. The blend temperature for polyethylene falls within the range of 150 to 200°C, preferably 160°C, and for poly(p-methylstyrene) within the range of 175 to 270°C, preferably 200°C. Although poly(p-methylstyrene), polyethylene and the compatibilizing agent may be blended simultaneously, it is preferred to pre-blend polyethylene and the compatibilizing agent for 5 to 15 minutes and then add poly(p-methylstyrene). This latter method enhances the "adhesive" properties between the polyethylene and poly(p-methylstyrene), thus creating greater interfacial adhesion of polymers. At temperatures in the vicinity of 160°C, polyethylene sheets very well and forms a clear film. Finally, poly(p-methylstyrene) is added to the blend. As the viscosity of the blend increases with the addition of the poly(p-methylstyrene), it is advantageous to increase the blending temperature to preferably 200°C. As the poly(p-methylstyrene) is compatible with the styrenic-diblock compatibilizing agent, the normally incompatible phases of polyethylene and poly(p-methylstyrene) will successfully interlock after blending for approximately 5 to 30 minutes, generally 10 minutes.

The resultant blends exhibit high impact strength and heat distortion properties. In general, the blends will also have increased impact strength over blends of poly(p-methylstyrene) and polyethylene which lack a compatibilizing agent.

The blends are particularly suited for applications in which high impact polystyrene and high impact poly(p-methylstyrene) are used. Representative examples for the product formed in the present invention include dairy product containers, detergent and oil containers, and refrigerator liners.

The following Examples illustrate the invention. Proportions and percentages are given by weight. The properties of the resulting polymers were tested under the conditions of the American Standard Test Method (ASTM).

### Comparative Example 1

### Preparation of a Comparative Polymer Blend from a 50/50 Mixture of Polystyrene (PS) and Polyethylene (PE)

The polymer blend had the following composition (weight percent):

| | |
|---|---|
| PS | 50 |
| PE | 50 |

PE was melted and sheeted in a roll mill at a temperature of 160°C for approximately 5 minutes. At this point, the PE was characterized by excellent sheeting tendencies on the rollers and a transparent appearance. PS was then blended with the PE at a temperature of 200°C for a period of time of about 10 minutes. The product blend was then removed from the roll mill, cooled to room temperature and pelletized.

The properties of the resultant blend are compared to the properties of PS alone and PPMS alone as follows:

| | PS | PPMS | PS/PE |
|---|---|---|---|
| Izod Notched $\frac{1}{8}$" (0.3 cm) Impact | 0.3 | 0.3 | 0.64 |
| Gardner Impact Strength | — | — | 51 |
| Elongation (%) | 3.5 | 2.8 | 7.2 |

Comparative Example 2

Preparation of a Control Polymer Blend from a 50/50 Mixture of Poly(p-methylstyrene (PPMS) and LLDPE

The polymer blend had the following composition (weight percent):

| | |
|---|---|
| PPMS | 50 |
| LLDPE | 50 |

and was prepared in the same manner as in Comparative Example 1. The properties of the resultant blend were as follows:

| | |
|---|---|
| Izod Notched $\frac{1}{8}$" (0.3 cm) Impact | 0.94 |
| Tensile Strength (psi) (kPa) | 3,390 (23374) |
| Yield Strength (psi) (kPa) | 3,550 (24477) |
| Elongation (%) | 9.7 |
| Tensile Modulus (psi) (kPa) | 173,000 ($1.2 \times 10^6$) |
| Gardner Impact Strength | 62 |

Example 1

Preparation of PPMS—LLDPE Blend with 5% Styrene-hydrogenated Butadiene Block Copolymer Compatibilizing Agent

The polymer blend had the following composition (weight percent):

| | |
|---|---|
| PPMS | 47.5 |
| LLDPE | 47.5 |
| Compatibilizing Agent (Shelviz-40) | 5.0 |

This blend was prepared using the method of Comparative Example 2, with the exception that the compatibilizing agent (molecular weight 120,000, styrene content 30% by weight) was blended with LLDPE for 5 minutes prior to the addition of PPMS. The final mixture was blended together for 10 minutes.

The properties of the final blend were as follows:

| | |
|---|---|
| Izod Notched $\frac{1}{8}$" (0.3 cm) Impact | 5.1 |
| Tensile Strength (psi) (kPa) | 3,300 (22754) |
| Yield Strength (psi) (kPa) | 3,470 (23926) |
| Elongation (%) | 9.7 |
| Tensile Modulus (psi) (kPa) | 170,000 ($1.2 \times 10^6$) |

Example 2

Preparation of PPMS—LLDPE-Compatibilizing Agent Blend

The polymer blend had the following composition (weight percent):

| | |
|---|---|
| PPMS | 45 |
| LLDPE | 45 |
| Compatibilizing Agent | 10 |

This blend was prepared using the same method and the same components as employed in Example 1, but different weight percents. The properties of the final blend were as follows:

| | |
|---|---|
| Izod Notched ⅛" (0.3 cm) Impact | 7.61 |
| Tensile Strength (psi) (kPa) | 2,850 (19651) |
| Yield Strength (psi) (kPa) | 2,850 (19651) |
| Elongation (%) | 9.6 |
| Tensile Modulus (psi) (kPa) | 140,000 ($9.7 \times 10^5$) |

Comparative Example 3

Preparation of High Impact Poly(p-methylstyrene) (HIPPMS) and LLDPE Blend

The polymer blend had the following composition (weight percent):

| | |
|---|---|
| HIPPMS (PMXR35B) | 90 |
| LLDPE | 10 |

The mixture was prepared using the same method employed in Comparative Example 2. The properties of the final blend were as follows:

| | |
|---|---|
| Izod Notched ⅛" (0.3 cm) Impact | 0.971 |
| Tensile Strength (psi) (kPa) | 3,600 (24822) |
| Yield Strength (psi) (kPa) | 3,200 (22064) |
| Elongation (%) | 25 |
| Tensile Modulus (psi) (kPa) | 204,000 ($1.4 \times 10^6$) |

Example 3

Preparation of Blend from Mixture of HIPPMS, LLDPE, and Compatibilizing Agent

The polymer blend had the following composition (weight percent):

| | |
|---|---|
| HIPPMS | 85 |
| LLDPE | 10 |
| Compatibilizing Agent | 5 |

The blend was prepared using the same method employed in Comparative Example 2. The compatibilizing agent was the same as in Example 1.

The properties of the final blend were as follows:

| | |
|---|---|
| Izod Notched ⅛" (0.3 cm) Impact | 4.45 |
| Tensile Strength (psi) (kPa) | 3,520 (24270) |
| Yield Strength (psi) (kPa) | 3,370 (23236) |
| Elongation (%) | 25.1 |
| Tensile Modulus (psi) (kPa) | 198,000 ($1.4 \times 10^6$) |

Example 4
Preparation of Blend from PPMS—LLDPE-Compatibilizing Agent

The polymer blend had the following composition (weight percent):

| | |
|---|---|
| PPMS | 47.5 |
| LLDPE | 47.5 |
| Compatibilizing Agent | 5.0 |

The blend was prepared using the same method employed in Example 1. The compatibilizing agent was the poly(para-methylstyrene) analog of that used in Example 1. The properties of the resulting polymer blend were as follows:

| | |
|---|---|
| Izod Notched ⅛" (0.3 cm) Impact | 2.54 |
| Gardner Impact | 160 |
| Tensile Strength (psi) (kPa) | 2,850 (19651) |
| Yield Strength (psi) (kPa) | 2,850 (19651) |
| Elongation (%) | 14.6 |

Comparative Example 3
Preparation of Blend from Mixture of Polystyrene, LLDPE, and Compatibilizing Agent

The polymer blend had the following composition (weight percent):

| | |
|---|---|
| Polystyrene | 47.5 |
| LLDPE | 47.5 |
| Compatibilizing Agent | 5 |

and hence was equivalent to the blend of Example 4 but with the PPMS replaced by PS.

The blend was prepared using the same method employed in Example 1. The properties of the final blend were as follows:

| | |
|---|---|
| Izod Notched ⅛" (0.3 cm) Impact | 1.70 |
| Gardner Impact | 108 |
| Tensile Strength (psi) (kPa) | 2,420 (16686) |
| Yield Strength (psi) (kPa) | 2,370 (16341) |
| Elongation (%) | 6.6 |

**Claims**

1. A polymer blend comprising polyethylene; poly(para-methylstyrene) and a compatibilizing agent.
2. A polymer blend according to claim 1 wherein the polyethylene comprises linear low density polyethylene.

3. A polymer blend according to claim 1 or 2 wherein the poly(para-methylstyrene) comprises high impact poly(para-methylstyrene).

4. A blend according to any preceding claim, wherein the compatibilizing agent is a hydrogenated diene diblock copolymer.

5. A blend according to any preceding claim 4, wherein the diene is butadiene.

6. A blend according to any preceding claim, wherein the compatibilizing agent is a hydrogenated butadiene-styrene diblock copolymer.

7. A blend according to claims 1 to 5, wherein the compatibilizing agent is a hydrogenated butadiene-paramethylstyrene diblock copolymer.

8. A blend according to claim 4, wherein the diene is isoprene.

9. A blend according to claim 8, wherein the compatibilizing agent is a hydrogenated isoprene-styrene diblock copolymer.

10. A blend according to claim 8, wherein the compatibilizing agent is a hydrogenated isoprene-paramethylstyrene diblock copolymer.

11. A blend according to claims 1 to 3, wherein the compatibilizing agent comprises a p-(methylstyrene)-ethylene graft copolymer.

12. A blend according to any preceding claim wherein the polyethylene is present in an amount from 10 to 47.5 by weight.

13. A blend according to any preceding claim wherein the poly(para-methylstyrene) is present in an amount from 50 to 85% by weight.

14. A blend according to any preceding claim wherein the compatibilizing agent is present in an amount from 2 to 10% by weight.

15. A method of preparing a polymer blend comprising polyethylene; poly(para-methylstyrene) and a compatibilizing agent, which method comprises the following steps:

1) combining the compatibilizing agent with the polyethylene to form a blended mixture; and

2) combining the poly(para-methylstyrene) with the blended mixture.

16. A method according to Claim 15, wherein the compatibilizing agent is combined with the polyethylene at a temperature from 150°C to 200°C.

17. A method according to claim 15 or 16 wherein the poly(para-methylstyrene) is combined with the blended mixture at a temperature from 175°C to 270°C.

**Patentansprüche**

1. Polymermischung, die Polyethylen, Polyparamethylstyrol und ein kompatibel wirkendes Mittel bzw. verträgliches Mittel umfaßt.

2. Polymermischung nach Anspruch 1, worin das Polyethylen lineares Polyethylen geringer Dichte umfaßt.

3. Polymermischung nach Anspruch 1 oder 2, worin das Polyparamethylstyrol stark verdichtetes Polyparamethylstyrol umfaßt.

4. Mischung nach einem der vorstehenden Ansprüche, worin das kompatibel wirkende Mittel ein hydriertes Diblock-Copolymer eines Diens ist.

5. Mischung nach Anspruch 4, worin das Dien Butadien ist.

6. Mischung nach einem der vorstehenden Ansprüche, worin das kompatibel wirkende Mittel ein hydriertes Diblock-Copolymer von Butadien/Styrol ist.

7. Mischung nach Anspruch 1 bis 5, worin das kompatibel wirkende Mitel ein hydriertes Diblock-Copolymer von Butadien/Paramethylstyrol ist.

8. Mischung nach Anspruch 4, worin das Dien Isopren ist.

9. Mischung nach Anspruch 8, worin das kompatibel wirkende Mittel ein hydriertes Diblock-Copolymer von Isopren/Styrol ist.

10. Mischung nach Anspruch 8, worin das kompatibel wirkende Mitel ein hydriertes Diblock-Copolymer von Isopren/Paramethylstyrol ist.

11. Mischung nach den Ansprüchen 1 bis 3, worin das kompatibel wirkende Mittel ein Pfropfcopolymer von p-(Methylstyrol) Ethylen ist.

12. Mischung nach einem der vorstehenden Ansprüche, worin das Polyethylen in einer Menge von 10 bis 74,5 Gew.-% vorhanden ist.

13. Mischung nach einem der vorstehenden Ansprüche, worin das Polyparamethylstyrol in einer Menge von 50 bis 85 Gew.-% vorhanden ist.

14. Mischung nach einem der vorstehenden Ansprüche, worin das kompatibel wirkende Mittel in einer Menge von 2 bis 10 Gew.-% vorhanden ist.

15. Verfahren zur Herstellung einer Polymerischung, die Polyethylen, Polyparamethylstyrol und ein kompatibel wirkendes Mittel umfaßt, wobei dieses Verfahren die folgenden Schritte umfaßt:

1) Kombinieren des kompatibel wirkenden Mittels mit dem Polyethylen, um eine vermischte Mischung zu bilden und

2) Kombinieren des Polyparamethylstyrol mit dieser vermischten Mischung.

16. Verfahren nach Anspruch 15, worin das kompatibel wirkende Mittel bei einer Temperatur von 150°C bis 200°C mit dem Polyethylen vermischt wird.

17. Verfahren nach Anspruch 15 oder 16, worin das Polyparamethylstyrol bei einer Temperatur von 175°C bis 270°C mit der vermischten Mischung kombiniert wird.

**Revendications**

1. Un mélange de polymères comprenant du polyéthylène, du poly(para-méthylstyrène) et un agent de compatibilité.

2. Un mélange de polymères selon la revendication 1, dans lequel le polyéthylène comprend du polyéthylène linéaire basse densité.

3. Un mélange de polymères selon la revendication 1 ou 2, dans lequel le poly(para-méthylstyrène) comprend du poly(paraméthylstyrène) à résistance au choc élevée.

4. Un mélange selon l'une quelconque des revendications précédentes, dans lequel l'agent de compatibilité est un copolymère hydrogéné de diène à deux séquences.

5. Un mélange selon la revendication 4, dans lequel le diène est le butadiène.

6. Un mélange selon l'une quelconque des revendications précédentes, dans lequel l'agent de compatibilité est un copolymère hydrogéné butadiène-styrène à deux séquences.

7. Un mélange selon les revendications 1 à 5, dans lequel l'agent de compatibilité est un copolymère hydrogéné butadiène-paraméthylstyrène à deux séquences.

8. Un mélange selon la revendication 4, dans lequel le diène est l'isoprène.

9. Un mélange selon la revendication 8, dans lequel l'agent de compatibilité est un copolymère hydrogéné isoprènestyrène à deux séquences.

10. Un mélange selon la revendication 8, dans lequel l'agent de compatibilité est un copolymère hydrogéné isoprène-paraméthylstyrène à deux séquences.

11. Un mélange selon les revendications 1 à 3, dans lequel l'agent de compatibilité comprend un copolymère greffé p-méthylstyrène-éthylène.

12. Un mélange selon l'une quelconque des revendications précédentes, dans lequel le polyéthylène est présent en quantité de 10 à 47,5% en poids.

13. Un mélange selon l'une quelconque des revendications précédentes, dans lequel le poly(para-méthylstyrène) est présent en quantité de 50 à 85% en poids.

14. Un mélange selon l'une quelconque des revendications précédentes, dans lequel l'agent de compatibilité est présent en quantité de 2 à 10% en poids.

15. Un procédé de fabrication d'un mélange de polymères comprenant du polyéthylène, du poly(para-méthylstyrène) et un agent de compatibilité, ce procédé comprenant les étapes suivantes:

1) on combine l'agent de compatibilité avec le polyéthylène pour former un mélange mélangé; et

2) on combine le poly(para-méthylstyrène) avec le mélange mélangé.

16. Un procédé selon la revendication 15, dans lequel l'agent de compatibilité est combiné avec le polyéthylène à une température de 150 à 200°C.

17. Un procédé selon la revendication 15 ou 16, dans lequel le poly(para-méthylstyrène) est combiné avec le mélange mélangé à une température de 175 à 270°C.